Europäisches Patentamt

European Patent Office

Office européen des brevets

(19)

(11) Publication number: **0 046 662**
**B1**

## EUROPEAN PATENT SPECIFICATION

(45) Date of publication of patent specification: **03.07.85**

(21) Application number: **81303796.7**

(22) Date of filing: **20.08.81**

(51) Int. Cl.⁴: **G 11 B 5/17,** G 11 B 5/127,
G 11 B 5/29

(54) **Magnetic transducer with built-in step-up transformer.**

(30) Priority: 25.08.80 JP 117591/80
08.09.80 JP 125069/80
11.12.80 JP 175541/80
22.12.80 JP 182521/80

(43) Date of publication of application:
**03.03.82 Bulletin 82/09**

(45) Publication of the grant of the patent:
**03.07.85 Bulletin 85/27**

(84) Designated Contracting States:
**DE FR GB**

(56) References cited:
**US-A-3 535 466**
**US-A-3 660 617**
**US-A-3 881 193**
**US-A-3 987 487**

**Patents Abstracts of Japan Vol. 4, No. 95, 09
July 1980 page 89P18.**

**Patents Abstracts of Japan Vol. 4, No. 95, 09
July 1980 page 90P18.**

(73) Proprietor: **Matsushita Electric Industrial Co.,
Ltd.**
**1006, Oaza Kadoma**
**Kadoma-shi Osaka-fu, 571 (JP)**

(72) Inventor: **Nakamura, Kazuo**
**9-2-28, Honmachi**
**Toyonaka-shi Osaka-fu (JP)**
Inventor: **Higashionji, Masaru**
**800-38, Oaza Kisabe Katano-shi**
**Osaka-fu (JP)**

(74) Representative: **Harrison, Philippa Dinah et al**
**A. A. THORNTON & CO Northumberland House**
**303-306 High Holborn**
**London WC1V 7LE (GB)**

Courier Press, Leamington Spa, England.

## Description

The present invention relates to a magnetic transducer with a built-in step-up transformer and, more particularly, to a magnetic transducer having a single turn of signal winding coupled to a step-up transformer which is integrally assembled with a magnetic ring head core. The invention is concerned with a construction of a step-up transformer in which the transformer shares part of its magnetic path with a rear portion of a magnetic ring head core.

The art of magnetic recording now encompasses a wide range of applications including those used in video, digital, instrumentation and audio recording. Most of these recording systems employ a so-called ring head, a magnetic transducer defining a substantially closed magnetic circuit including a pair of core halves separated by a front non-magnetic gap and defining an internal coil winding aperture, with multi turns of winding being disposed about the core half through the coil winding aperture to be interlinked with the magnetic circuit of the transducer. Transducers used in these systems of course take great many forms, and various disclosures have been given so far concerning their construction designs, preparation techniques and so on.

In the prior art of ring head construction, however, complications are usually encountered with the winding processes of multi-turn signal coils. This is particularly true of those high frequency recording and reproducing transducers as typified by video heads in which the winding aperture is usually extremely small to assure high flux transfer efficiency of the head core: in most cases with winding aperture being too small to be machine-managed, unavoidable results often are those exhaustible manual-labor coil winding processes.

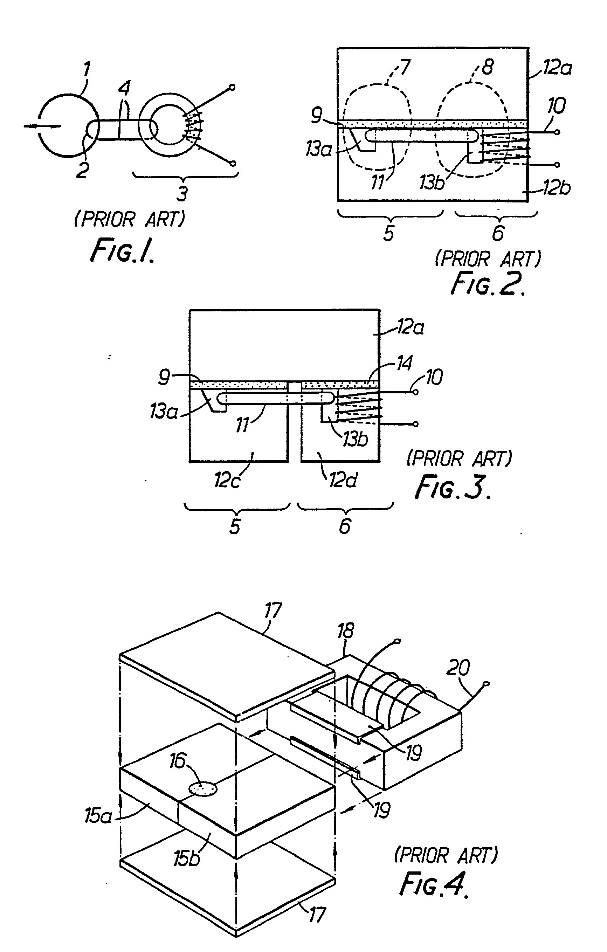

This is where a single-turn transducer can be effectively introduced with a step-up transformer being integrally incorporated in the transducer and coupled with the single-turn winding. This is schematically shown in Fig. 1, which shows a ring head core 1, a single-turn signal winding 2, a step-up transformer 3 and junction lead portions 4, respectively.

The type of transducer as shown in Fig. 1 will be referred to as a single-turn step-up transducer, while a transducer having a multi-turn winding about its ring head core and no built-in transformer will be referred to as a multi-turn direct-winding transducer hereinafter.

It should be noted here that the object of single-turn step-up transducers is not the provision of a transducer superior in recording and reproducing performance to a multi-turn direct-winding transducer: single-turn step-up transducers are only comparable in performance with their multi-turn direct-winding counterparts when their transformers are 100% loss free and the single-turn windings are of zero electrical resistance. The object rather is to provide one possible form of transducer which greatly eliminates complicated winding processes associated with multi-turn direct-winding transducers, while of course maintaining a comparable transducer performance.

Upon designing a single-turn step-up transducer, therefore, the transfer efficiency of the transformer portion is of vital importance to any type of application, and special considerations have to be taken into account to meet particular requirement. Reduction of electrical resistance of the single-turn winding is also another important design consideration, since it is directly connected with lowering of the transducer impedance and improvement to transfer efficiency, which are particularly beneficial to high frequency applications. Yet another and probably the most important matter is the construction design by which winding processes can be thoroughly machine-managed or automated.

Figs. 2 to 4 show some of the conventional embodiments of single-turn step-up transducers.

Referring first to Fig. 2, head core halves 12a and 12b are formed as a pair of plates of magnetic material. The head core half 12b is E-shaped and has a single-turn winding 11 around its central limb and a multi-turn transformer winding 10 around one of its other limbs. The core halves are joined together along a non-magnetic operating gap 9 to form a magnetic coupling with a signal winding aperture 13a and a transformer winding aperture 13b. This integral construction provides a ring head portion 5 with a magnetic flux path and a transformer portion 6 with a flux path 8.

The defect of the construction shown in Fig. 2 is that the single-turn winding 11 and the transformer winding 10 must be disposed only after the core halves 12a, 12b are jointed together, thus making the automatic disposition of the windings, transformer winding 10 in particular, quite unpractical. This is because the jointing of the core halves are usually done by means of glass, brazing or the like to assure a firmly defined non-magnetic gap and the sufficient bonding strength, which . high-temperature treatment inevitably must precede the provision of either winding 10, 11 on the core halves.

Fig. 3, shows a construction basically similar to that shown in Fig. 2, but the core half 12b in Fig. 2 is divided into two C-shaped portions 12c and 12d which are used to form the ring head portion 5 and the transformer portion 6 respectively. In this construction the core half 12a and the core portion 12c may first be jointed by glass, brazing or the like, and then the C-shaped transformer core portion 12d with the transformer winding 10 disposed on it can be jointed to the rear portion of the core half 12a by means of a low-temperature adhesive material 14 such as an epoxy resin. The single-turn winding 11 is subsequently disposed to encompass the core portions 12c and 12d through apertures 13a and 13b. Thus an automated winding disposition process may be attained relatively easily.

In the construction of Fig. 3, however, the adhesion area between the core half 12a and the transformer core portion 12d is largely restricted by the thickness of the core half and the transformer core portion, which, for example, is usually less than 200 μm for a typical video head configuration. This may cause a serious lack of bonding strength when the bonding material is a resin or the like which is almost inevitable for this construction.

Referring now to Fig. 4, a pair of core halves 15a, 15b are jointed to form a ring head core with an internal coil winding aperture which is to be filled with an electric conductor 16. On either side of the ring head core are deposited thin conductor layers 17 which are in electrical contact with the conductor 16 to form a single-turn signal winding (not closed). On the other hand a step-up transformer 18 is provided with a single-turn primary winding 19 (not closed) and a multi-turn secondary winding 20. The transformer 18 is then jointed to the rear edge of the ring head core, and by making an electrical contact between the conductor layer 17 and the primary winding 19 a single-turn step-up transducer is constructed, in which a ring head core is virtually magnetically separated from the transformer core.

The transducer having the above construction, however, possesses the shortcoming that since no cores are used in common for the ring head core and the transformer core, the transducer as a whole tends to be somewhat large in size, as well as that the transformer construction itself is not suited for automated winding processes.

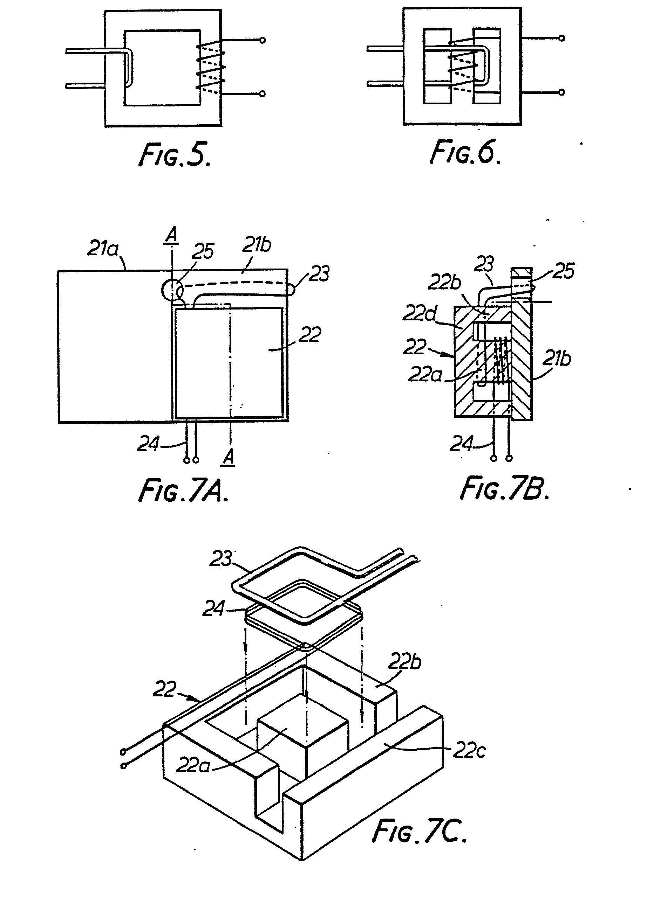

In addition to the problems of the prior art mentioned above, a comment has to be made on the type of transformers employed. Namely transformers are usually typed into two: one having a substantially annular magnetic core, with non-coaxial primary and secondary windings being disposed to it as shown in Fig. 5, and the other having coaxially disposed primary and secondary windings and a magnetic circuit arranged to couple both windings as shown in Fig. 6. The former is called a core type and the latter a shell type, and it is generally known that the shell type provides higher transfer efficiency. As is evident from Figs. 2 to 4, step-up transformers employed in the prior art mentioned above are all core-type transformers and hence transducers employing these transformers tend to suffer from poor efficiency.

As is understood from the above descriptions single-turn step-up transducers according to the prior art involve problems of:

1) difficulties in automating the coil winding processes;

2) lack of bonding strength in the transformer portions;

3) insufficient transfer efficiency of the transformer portions; and

4) difficulties in assembling the transducers compact.

There is one more shortcomings of the conventional embodiments, which is that since transformer windings protrude on either side of the transducer of the conventional embodiments, one finds difficulties in striking or laminating the transducers to form a multi-channel transducer.

United States Patent Specification 3,660,617 discloses a magnetic transducer with a built-in step-up transformer, said transformer sharing part of its magnetic path with a portion of a magnetic ring head core, said ring head core defining a substantially closed magnetic path, a front non-magnetic gap and an internal winding aperture and a signal winding being disposed on said ring head core through said winding aperture so as to be interlinked with said closed magnetic path.

The present invention provides a magnetic transducer comprising a ring head and a built-in transformer, said transformer sharing part of its magnetic path with a portion of a magnetic core of said ring head, said ring head comprising: a ring head core defining a substantially closed magnetic path, a front non-magnetic gap and an internal winding aperture; and a signal winding disposed on said ring head core through said winding aperture so as to be interlinked with said closed magnetic path, characterised in that a transformer core is mounted at a rear plane of said ring head core and has a central yoke, at least one peripheral yoke and a linkage yoke, with said central yoke and said peripheral yokes being magnetically connected to each other at one end by said linkage yoke and at the other end by said ring head core so as to form a shell-type transformer core; a primary winding is disposed about said transformer core encompassing said central yoke and is connected to said signal winding; and a secondary winding is disposed about said transformer core encompassing said central yoke in a coaxial manner with said primary winding.

A preferred embodiment provides a magnetic transducer having a construction which is extremely suited for automated winding processes, and which is comparable in performance to multi-turn direct-winding transducers.

It is also capable of being used to form an improved multi-channel magnetic transducer.

Although, as will be described hereinafter, the invention is applicable to all forms of magnetic transducers, it is of greatest benefit to the types of transducers which must meet the most stringent performance requirement, in particular those employed in extremely high frequency recording and reproduction as typified by video recording, and the examples given relate specifically to these types.

In order that the present invention be more readily understood embodiments thereof will now be described by way of example with reference to the accompanying drawings, in which:—

Fig. 1 is a schematic illustration showing the principle of a single-turn step-up transducer;

Figs. 2 and 3 show plan views of conventional single-turn step-up transducers;

Fig. 4 shows an exploded perspective illustration of another conventional single-turn step-up transducer;

Figs. 5 and 6 are schematic illustrations showing general constructions of transformers;

Fig. 7A shows a plan view of a single-turn step-up transducer according to the present invention, Fig. 7B a sectional side elevation thereof and Fig. 7C an exploded perspective view of the transformer portion thereof;

Figs. 8A to 8E are illustrations of various modified transformer cores according to the present invention;

Figs. 9A and 9B are graphic representations showing how transformer performance is affected by transformer configurations shown in Figs. 8B to 8E;

Fig. 10A shows a plan view of another modified embodiment of the invention, Fig. 10B a sectional side elevation thereof, Fig. 10C a sectional rear elevation thereof, Fig. 10D a plan view of a secondary winding thereof and Fig. 10E a plan view of a primary winding thereof;

Fig. 11 shows an exploded perspective view of another modified embodiment of the invention;

Fig. 12 shows a perspective view of the embodiment shown in Fig. 11 in its completion;

Fig. 13A shows an exploded perspective view of another modified embodiment of the invention and Fig. 13B a front elevation thereof;

Fig. 14 shows a perspective view of another modified embodiment of the invention;

Fig. 15A shows an exploded perspective view of a multichannel transducer according to the invention, Fig. 15B a side elevation thereof and Fig. 15C a sectional front elevation thereof;

Fig. 16 shows a sectional front elevation of a modified embodiment of the invention;

Fig. 17 shows a sectional front elevation of another modified embodiment of the invention;

Fig. 18A shows a perspective view of a head core half employed in the succeeding embodiment shown in Fig. 18B; and

Fig. 18B is a sectional front elevation of another modified embodiment of the invention.

A single-turn step-up transducer in accordance with the invention is shown in Figs. 7A to 7C as it is adapted to be applied to a typical video recording and reproducing transducer for rotary-head recording systems. In the figures a magnetic circuit of a ring head core is provided by a pair of core halves 21a, 21b, usually made of ferrite or sendust. Although the ring head core itself is a vital portion of the transducer, detailed description will not be given here concerning its configuration design, preparation techniques etc. These may be obtained from the knowledge of prior art and are not of particular importance to the understanding of the invention. A transformer core 22 by itself is of open magnetic path, but forms, together with the rear portion of the head core half 21b, a complete closed-magnetic-path shell-type transformer core, like the one shown in Fig. 6. A single-turn winding 23 encompasses the core half 21b through an aperture 25, and making an interlinkage with the transformer core 22 as well, thus forming an electrically closed circuit to couple the ring head core with the transformer. The portion of the single-turn winding 23 about the core half 21b forms a signal winding, while the rest of the winding 23 about the transformer core forms a primary winding of the transformer. A multi-turn secondary winding 24 is disposed coaxially with the above-mentioned primary winding.

Configuration of the transformer core will be more clearly understood from Fig. 7C, from which it will be seen that a central yoke 22a has the primary winding 23 and the secondary winding 24 coaxially disposed on it. Peripheral yokes 22b and 22c and the bottom 22d of the core which forms a linkage yoke are disposed so as to complete the closed magnetic path of the transformer core together with the rear portion of the head core half 21b.

In the actual preparation of the transducer the primary and the secondary windings 23, 24 prepared beforehand in their predetermined shapes are disposed to encompass the central yoke 22a, as illustrated in Fig. 7C, and then the transformer core 22 is jointed to the rear plane of the head core half 21b by an epoxy resin or the like. The planes of the transformer core and of the ring head core, which face each other upon jointing, must of course be mirror-polished so as to assure high transfer efficiency of the transformer portion. Subsequently, both the ends of the primary winding are connected after encompassing the head core half 21b through the aperture 25 to form an electrically closed circuit.

As is clearly understood from the above description, construction of the transducer shown in Fig. 7 is highly suited to introduce automated assembling processes, greatly eliminating complications associated with winding disposition processes. Moreover, the manner in which transformer core is jointed to the ring head core provides sufficiently large adhesion area, thus assuring satisfactory bonding strength as well as stable magnetic circuit of the transformer portion. Furthermore, the shell-type transformer provides exceedingly high coupling coefficient K, and the whole transducer can be made quite compact.

Yet another important advantage resides in that almost any multi-turn direct-winding video head cores can be used without any substantial alteration for the ring head portion. In other words one can change a conventional multi-turn direct-winding video head into its "single-turn step-up version" without any substantial change of the head core but only by an "addition" of a transformer portion. This is a significant difference from those single-turn step-up transducers in accordance with the prior art mentioned before, in which ring head portions must be so designed according to each construction.

A similar advantage derives concerning a transducer assembly base. Namely, in the conventional transducers shown in Figs. 2 to 4, the assembly base has to be so designed as to avoid the windings of the transformer, whereas the transducer shown in the remainder of the Figures does not require such special consideration. This is because the addition of the transformer is effected only to one side of the ring head core, neither to both sides nor to the edge portion of the core, thus with no "obstacles" being present on the other side of the head core which faces the assembly base.

These advantages concerning the compatibility of ring head cores and assembly bases are valuable particularly when one intends to replace multi-turn direct-winding video heads that have already been running for mass production with single-turn step-up transducers with minimum amount of jobs for alteration.

Although the advantages described herebefore are highly exhibited when the signal winding and the primary winding of the transformer are of single turn, this is not intended as a definition of the limits of the construction.

A description will now be given on the operation of the transducer thus constructed. Upon reproduction a signal flux is induced in the magnetic circuit of a ring head core as the transducer is caused to scan prerecorded tapes. Then a single-turn winding 23 interlinkaging with the signal flux induce an emf being proportional to the differential of the signal flux in the head core. The emf thus induced cause to excite a transformer to yield an output voltage at a secondary winding 24, being stepped up in accordance with a winding ratio of the transformer. Recording, on the other hand, can be accomplished by following the processes reverse to the reproduction processes mentioned above.

In accordance with the above-mentioned arrangements, the present inventors prepared a singe-turn step-up transducer which is adapted to operate as a video head for a VHS-type (VHS is a trade mark) video cassette tape-recorder. For a ring head portion of the transducer was used a video head core employed in VHS recorder. The results obtained were quite satisfactory: the difference of the reproduce output between the original VHS head and its single-turn step-up version was within ±0.2 dB over the MHz frequency range, where, of cource, the number of turns of winding in the original head and that of the secondary winding of the single-turn step-up transducer were held constant to be 17. Although a slight increase was seen in the inductance L and in the real part of the impedance Re(Z) for the single-turn step-up transducer, this was almost of negligible amount for practical applications. The transformer portion itself exhibited an exceedingly high value of coupling coefficient K of being approximately 0.998 over the MHz frequency range. The inventors also performed video S/N measurements and visual evaluation of the reproduced signal on a TV screen, and the results were that there were no appreciable differences between the original VHS head performance and that by the single-turn step-up transducer of the invention.

Descriptions are now given concerning the modified embodiments of the invention, concerning first particularly the modifications of the transformer portion of the transducer.

Fig. 8A shows a modified configuration of the transformer core which is to be substituted for that shown in Fig. 7C. Here, engravings are cut on the plate of magnetic material, the engravings being arranged in parallel crosses so as to define a central yoke 27, periphery yokes 28a to 28h and a linkage yoke 26a between the central and the periphery yokes. Although not explained before, the configuration in Fig. 7C of course involves a linkage yoke, too. The virtue of this configuration compared with that shown in Fig. 7C is its easiness of preparation: one has only to run a cutter, a diamond wheel for example, four times, twice in parallel and another twice perpendicular to it.

By employing the transformer core of this configuration, the present inventors prepared a single-turn step-up transducer, and performed various measurements as before. No appreciable differences were seen between the transducers using the cores shown in Fig. 7C and Fig. 8A.

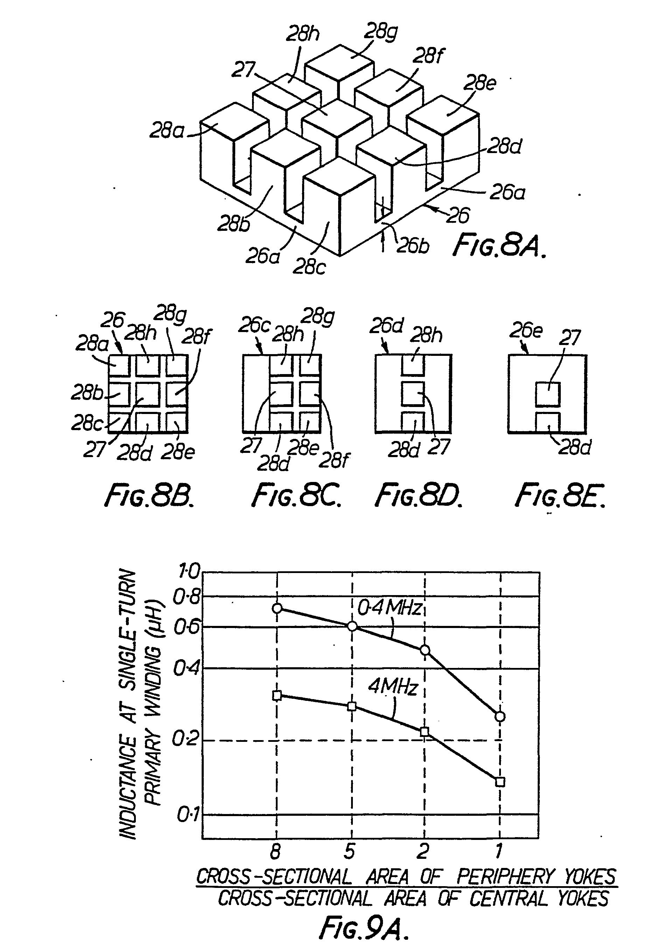

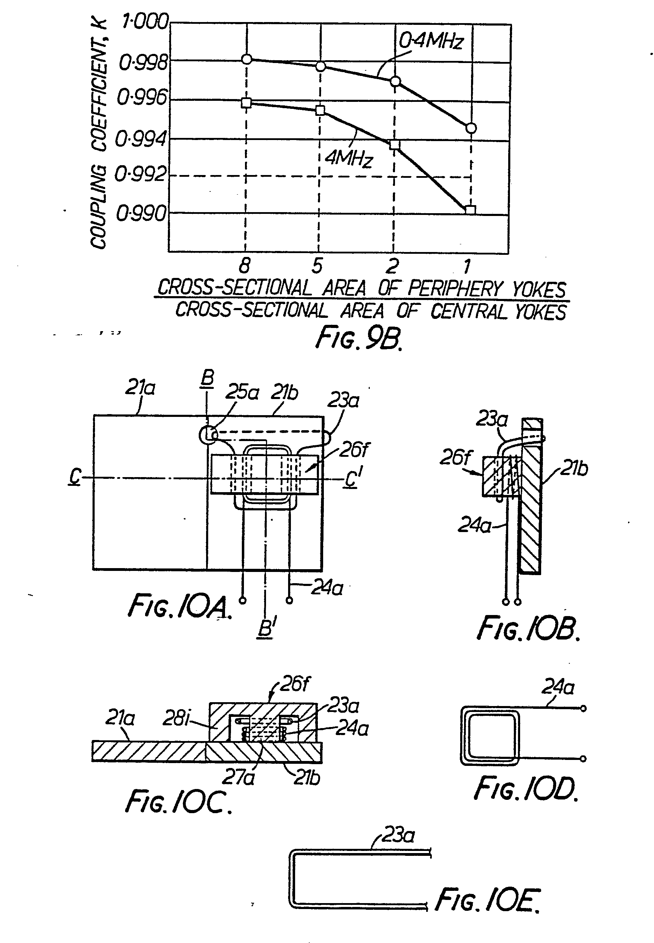

Transformer configurations shown in Figs. 8B to 8E, and graphic representations shown in Figs. 9A, 9B are to explain experiments done to determine the dependence of transformer performance on the ratio of cross-sectional area of the periphery yokes to that of the central yoke. First, Fig. 8B shows a core similar to that shown in Fig. 8A, where cross-sectional area of the central yoke 27 and of each of the periphery yokes 28a to 28h are made to be the same. Cores shown in Figs. 8C to 8E are those which are prepared by removing some of the periphery yokes from the core shown in Fig. 8B: the core in Fig. 8C lacking periphery yokes 28a, 28b and 28c, the one in Fig. 8D further lacking 28e, 28f and 28g and the one in Fig. 8E still further lacking 28h. Thus prepared are the core 26 having the ratio of cross-sectional area of total periphery yokes to that of the central yoke of 8, the core 26c having that of 5, the core 26d having that of 2 and the core 26e having that of 1. By using these transformer cores single-turn step-up transducers were constructed, and an inductance at a single-turn primary winding and a coupling coefficient K between the primary and the secondary windings were measured. These are shown in Figs. 9A and 9B, where it is seen that losses are almost negligible in the inductance and K for the above-mentioned ratio no less than 2, whereas they are appreciable for the ratio of 1. Correspondingly, the transducers using transformer cores 26, 26c and 26d showed reproduce output almost the same as that using the transformer core shown in Fig. 7C, whereas the one using the core 26e bore the loss of aboug 1 dB at 5 MHz. In these experiments the thickness of the linkage yoke 26b of each transformer core was set at twice the thickness of the ring head core, which constituted a part of the transformer's magnetic path.

Experiments were performed concerning also the thickness of the linkage yoke 26b, and it was proved that the thickness of the linkage yoke 26b must not be less than the thickness of the ring head core to assure the transformer performance.

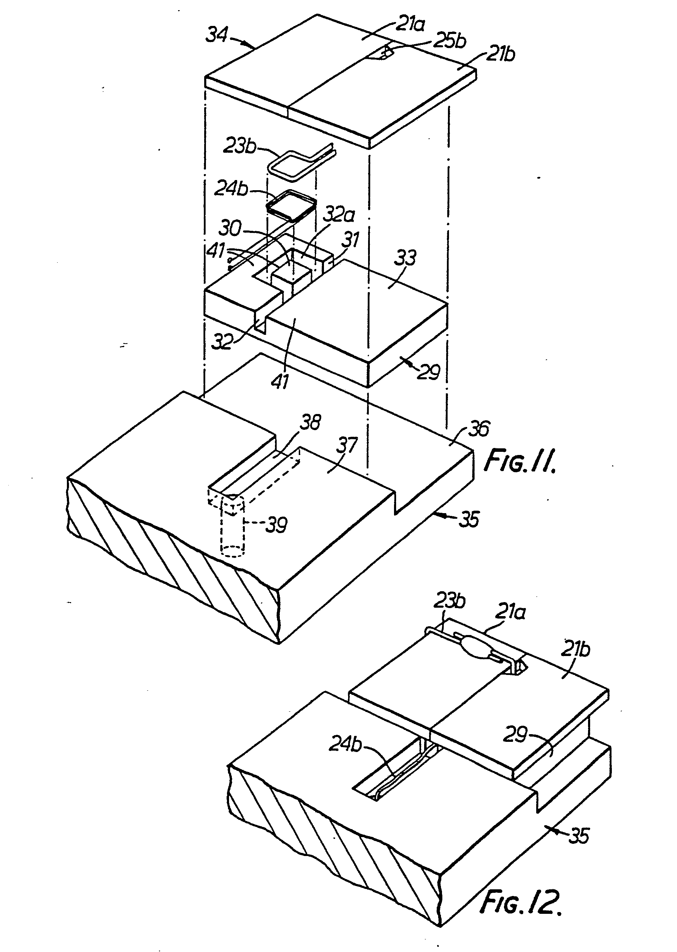

Figs. 10A to 10B show another modified embodiment of the invention. A pair of head core

halves 21a, 21b are jointed by glass or the like to form a ring head core with an internal winding aperture 25a. 26f is a transformer core having a central yoke 27a and a couple of periphery yokes 28i, which forms a closed-magnetic-path shell-type transformer core together with the head core half 21b. 23a is a single-turn winding encompassing the core half 21b through the aperture 25a and making an interlinkage with the central yoke 27a, thus forming an electrically closed loop to couple the ring head core with the transformer. 24a is a multi-turn winding disposed to form a secondary winding of the transformer.

Upon assembling the transducer, the primary winding 23a and the secondary winding 24a prepared beforehand in their predetermined shapes as shown in Figs. 10D, 10E are disposed around the central yoke 27a, and thus-prepared transformer core is jointed to the rear plane of the core half 21b in the manner in which the central yoke and the peripheral yokes align in parallel to the front edge of the ring head core as shown in Fig. 10A i.e. the line joining the centres of the central yoke and the peripheral yokes is parallel to the front edge. Then the both ends of the primary winding 23a are jointed after encompassing the core half 21b through the aperture 25a to form a closed loop.

A single-turn step-up transducer thus constructed showed a recording and reproduction performance nearly as good as that of the form embodiment shown in Fig. 7A.

Although this construction may appear to be a mere adaptation of the transformer core 26d shown in Fig. 18D, it has special advantages over the former embodiments of the invention. In the first place, since three yokes of the transformer core align in parallel to the front edge of the head core, the transformer core can be positioned closer to the front edge than in the cases of the former embodiments, and hence the single-turn winding 23a can be made shorter, and its electrical resistance can be reduced. And in the second, the primary and the secondary windings can be formed in the shapes shown in Figs. 10D and 10E, namely in the shapes having no constricted portions unlike those shown in Fig. 7C. This of course makes the length of the primary winding still shorter, and the preparation of the winding easier. In addition to these, it is needless to say that the preparation of the transformer core is extremely easy owing to its simple configuration.

Fig. 11 shows another modified embodiment of the invention, in which a transformer portion is integrated to the transducer assembly base. In the figure, 35 is an assembly base which is usually made of a non-magnetic metallic material. 36 is a stepped portion being formed at a front portion of the assembly base 35. 29 is a transformer core similar to that shown in Fig. 7C, but having this time a relatively large periphery yoke 33 for the firm adhesion of a ring head core to the transformer core 29. To the stepped portion 36 mentioned above is adhered the transformer core 29, and hence the depth 40 of the stepped portion is set to be nearly the same as the thickness of the transformer core 29. Subsequently, the upper plane 37 of the assembly base and the open face 41 of the transformer core are mirror-polished so that they can be in the same plane. 21a and 21b are a pair of head core halves to form a ring head core 34 with an internal winding aperture 25b. The ring head core 34 is then adhered to the open face 41 of the transformer core 29 after a primary and a secondary windings 23b, 24b are disposed to the engravings 31, 32 and 32a encompassing the central yoke 30 as shown in the figure. By this, as is the same as the former embodiments, an open magnetic path of the transformer core is made into a closed magnetic path forming a shell-type transformer core. Subsequently, one end of the primary winding is led in through the aperture 25b to be jointed with the other, while the leads from the secondary winding are guided along the engraving 38 to be taken out through the hole 39, arriving finally at the terminal board (not shown) disposed on the rear side of the assembly base 35. Incidentally, although not directly concerned with the invention, the terminal board is usually placed on that side of the assembly base opposite to that to which a head core is disposed in most of the transducers used in rotary-head video tape recorders, since the face to which the head core is adhered is taken to be the datum plane when the head assembly is mounted to the video cylinder.

In the actual preparation processes, the assembly base 35, the transformer core 29, the primary winding 23b and the secondary winding 24b are assembled into one in the first place to form a "composite assembly base", and in the second, the ring head core 34 is adhered to the composite assembly base, then follows the connection of the primary winding 23b to form the signal winding portion of the single-turn winding.

The transducer in its completion is shown in Fig. 12.

By virtue of the composite assembly base, the embodiment mentioned above has the advantage over the former embodiments of the invention, which is that the process of adhering the head core to the assembly base and the process of jointing the transformer core to the head core, both of which require precision works, can be put into one. Although the processes of adhering the transformer core to the assembly base and of forming the stepped portion may be aded to the processes of former embodiments, these are of course the jobs of less precision.

Another advantage of the embodiment here is that since the transformer core is adhered to the assembly base in the earlier stage of the preparation, the transformer core, which is usually quite small when the invention is applied to a video head as in the present case, can be handled with greater ease than in the cases of the former embodiments.

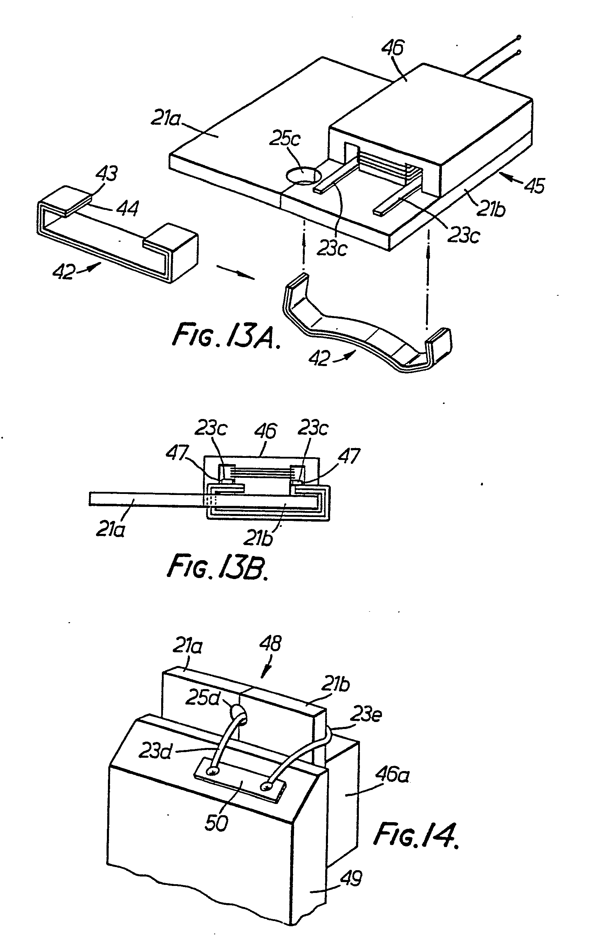

Shown in Figs. 13A, 13B and 14 are another embodiment specifically concerned with modification of signal windings.

Referring first to Fig. 13A, 45 is an assembly in which a ring head core and a step-up transformer are integrated, but a signal winding. Preparation up to this stage can be made following the processes shown in the former embodiments of the invention. A transformer core 46 may be of any type shown before, but illustrated here is the one identical to that shown in Fig. 8C. 42 is a single-turn composite signal winding, in which an elastic conductor tape 43 and an adhesive tape 44 are employed to form a C-shaped lamination. The signal winding 42 is inlaid to encompass the core half 21b with one end through the aperture 25c, and then is connected to the primary winding 23c at the portion 47 to form a closed circuit as shown in Fig. 13B. The connection may be performed by soldering, laser welding or the like. The adhesive tape disposed inside of the conductor 43 is of course for insulation against and adhesion to the core half 21b.

Referring now to Fig. 14, 48 is a ring head core to which a transformer 46a is integrated, while 49 is a transducer assembly base to which a transducer is adhered. On the front portion of the assembly base 49 is provided a conductor portion 50 which is electrically insulated from the base. The one lead 23e of the primary winding being extended is directed aside the core 21b to be connected to the conductor portion 50, and the other lead 23d led in through the aperture 25d to be connected to the conductor portion as well. The conductor portion 50 may be disposed on the head core itself in such cases as shown in Fig. 12, where there is a room for this arrangement.

The advantage of these modified embodiments concerning the signal winding is their simplicity of the constructions involved, highly suited for automating the preparation processes.

As is understood from the description heretofore, one remarkable feature of the transducer is that the transformer windings do not protrude to either side of the transducer, namely transformer windings are sandwiched by the ring head core and the transformer core. This feature, accordingly, is highly exhibited when the invention is applied to multi-channel transducers.

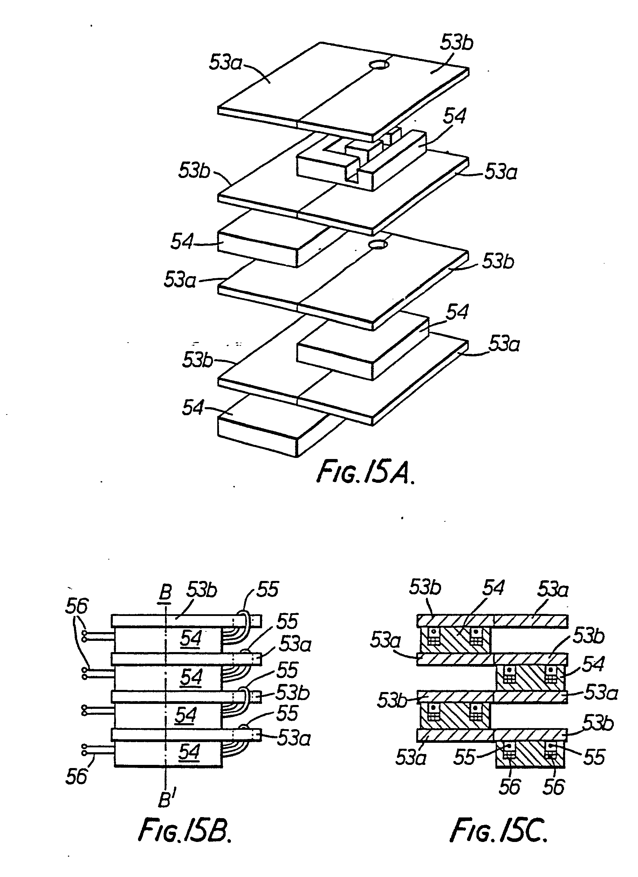

Figs. 15A to 15C show one such embodiment, in which a four-channel transducer is constructed by laminating singe-turn step-up transducer elements, each of which is basically identical to the transducer shown in Figs. 7A to 7C. In each transducer element, 53a, 53b are a pair of core halves to form a ring head core, 54 is a transformer core, 55 is a single-turn winding which forms a signal winding and a primary winding and 56 is a multi-turn secondary winding. Although this may appear to be a simple lamination of the former embodiment of the invention, the lamination is more easily attained than in the cases where single-turn step-up transducers of the conventional construction are employed for each transducer element, since there is no protrusion of the transformer winding toward the direction of lamination.

Fig. 16 shows a similar embodiment to that shown in Figs. 15A to 15C, but the transformer cores are modified so as to reduce an interval between each channel. As is clear from the figure, a transformer core 54a in each transducer element is provided in a construction without a linkage yoke between a central yoke and periphery yokes, in place of which serves a head core half 53a constituting an adjacent channel, except for the one 54 placed on one end of the transducer.

Fig. 17 shows another modification in which still more concentration is achieved by utilizing the space between each ring head core.

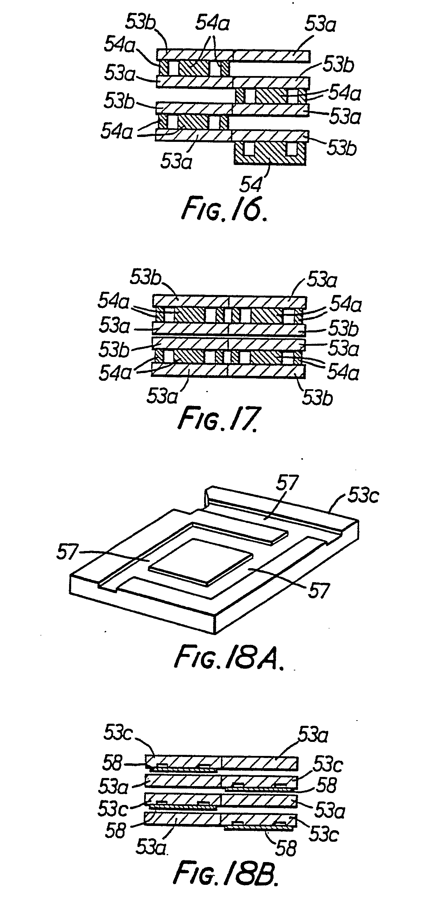

Figs. 18A, 18B show yet another modification in which each core half 53c has a transformer-core portion integrally built to itself. Grooves 57 to which windings are disposed canbe provided by chemical etching, laser engraving or the like means. As shown in Fig. 18B, the means to complete the magnetic path of the transformer can be a simple flat plate 58 of magnetic material for this case, thus enabling channel intervals still smaller than above-mentioned embodiments.

## Claims

1. A magnetic transducer comprising a ring head and a built-in transformer, said transformer sharing part of its magnetic path with a portion of a magnetic core of said ring head, said ring head comprising:

a ring head core (21a, 21b) defining a substantially closed magnetic path, a front non-magnetic gap and an internal winding aperture (25); and

a signal winding (23) disposed on said ring head core (21a, 21b) through said winding aperture (25) so as to be interlinked with said closed magnetic path, characterised in that

a transformer core (22) is mounted at a rear plane of said ring head core (21a, 21b) and has a central yoke (22a), at least one peripheral yoke (22b) and a linkage yoke (22d), with said central yoke (22a) and said peripheral yokes (22b) being magnetically connected to each other at one end by said linkage yoke (22d) and at the other end by said ring head core (21a, 21b) so as to form a shell-type transformer core;

a primary winding (23) is disposed about said transformer core (22) encompassing said central yoke (22a) and is connected to said signal winding (23); and

a secondary winding (24) is disposed about said transformer core (22) encompassing said central yoke (22a) in a coaxial manner with said primary winding (23).

2. A magnetic transducer of claim 1, in which a ratio of the total sum of cross-sectional areas of said peripheral yokes (22b) to a cross-sectional area of said central yoke (22a) is no less than two.

3. A magnetic transducer as claimed in claim 1, in which a minimum thickness of said linkage yoke (22d) is no less than a thickness of said ring head core (21a, 21b), the thicknesses being measured in a direction parallel to the winding axis of the transformer windings (23, 24).

4. A magnetic transducer as claimed in claim 1, 2 or 3, in which a line joining the centres of the central yoke (Fig. 10A, 22a) and said peripheral yokes (22b) is parallel to a front edge of said ring head core (21a, 21b), with said central yoke (22a) being positioned between two peripheral yokes (22b).

5. A magnetic transducer as claimed in any one of claims 1 to 4, further comprising an assembly base (Fig. 11, 35) for supporting the assembly of said components, with said transformer core (29) being adhered to said assembly base (35).

6. A magnetic transducer as claimed in any one of claims 1 to 5 in which said signal winding (23) is provided by a C-chaped conductor (Fig. 13A, 42), each end of which is connected to said primary winding (23c) on that side of said ring head core (21b) to which said transformer core (46) is disposed.

7. A magnetic transducer as claimed in any one of claims 1 to 5, in which said signal winding (23) is provided by an extension (Fig. 14, 23e, 23d) of said primary winding (23), each end of which is connected to a conductor portion (50) which is disposed on that side of said ring head core (21a, 21b) opposite to that to which said transformer core (46a) is disposed.

8. A multi-channel magnetic transducer comprising the magnetic transducer of claim 1 as an each transducer element.

9. A multi-channel magnetic transducer as claimed in claim 8, in which each of said transformer cores (54) is disposed on one of the halves (53a) forming said ring head core (53a, 53b) in the manner that the transformer cores (54a) of adjacent channels are located in staggered condition.

10. A multi-channel magnetic transducer as claimed in claim 8, in which said linkate yoke of each of said transducer element is provided by a portion (53b) of said ring head core (53a, 53b) constituting an adjacent channel.

11. A multi-channel magnetic transducer as claimed in claim 8, in which two of said transducer elements are formed as a unit (Fig. 17) in the manner that said transformer core (54a) of each element is disposed between the two ring head cores (53a, 53b) of those elements, with one of the transformer cores (54a) being located at one side core half of said ring head core and with the other of the transformer cores at the other side core half.

12. A multi-channel magnetic transducer as claimed in claim 8, in which said central and periphery yokes are formed integrally (Fig. 18A) to said ring head core (53a, 53c) by providing the surface portion of the ring head core (53c) with separating grooves (57).

**Revendications**

1. Transducteur magnétique comprenant une tête annulaire et un transformateur incorporé, le transformateur partageant une partie de son chemin magnétique avec une partie d'un noyau magnétique de la tête annulaire, ladite tête annulaire comprenant:

un noyau de tête annulaire (21a, 21b) définissant un chemin magnétique essentiellement fermé, un espace avant non magnétique et une ouverture d'enroulement intérieure (25); et

un enroulement de signal (23) disposé sur le noyau de tête annulaire (21a, 21b) par l'ouverture d'enroulement (25) de manière à être relié au chemin mangétique fermé, caractérisé en ce qu'il comprend:

un noyau de transformateur (22) monté sur un plan arrière du noyau de tête annulaire (21a, 21b) et qui comporte une culasse centrale (22a), au moins une culasse périphérique (22b) et une culasse de liaison (22d), la culasse centrale (22a) et les culasses périphériques (22b) étant connectées magnétiquement entre elles par une extrémité au moyen de la culasse de liaison (22d) et par l'autre extrémité au moyen du noyau de tête annulaire (21a, 21b) de manière à former un noyau de transformateur du type cuirassé;

un enroulement primaire (23) disposé autour du noyau de transformateur (22) et entourant la culasse centrale (22a) et étant connecté à l'enroulement de signal (23); et

un enroulement secondaire (24) disposé autour du noyau de transformateur (22) et entourant la culasse centrale (22a) d'une manière coaxiale avec l'enroulement primaire (23).

2. Transducteur magnétique selon la revendication 1, caractérisé en ce que le rapport de la somme totale des surfaces de section transversale des culasses périphériques (22b) à une surface de section transversale de la culasse centrale (22a) est au moins égal à deux.

3. Transducteur magnétique selon la revendication 1, caractérisé en ce que l'épaisseur minimale de la culasse de liaison (22d) est au moins égale à l'épaisseur du noyau de tête annulaire (21a, 21b), les épaisseurs étant mesurées dans une direction parallèle à l'axe d'enroulement des enroulements de transformateur (23, 24).

4. Transducteur magnétique selon l'une quelconque des revendications 1 à 3, caractérisé en ce que la ligne joignant les centres de la culasse centrale (Figure 10A, 22a) et des culasses périphériques (22b) est parallèle à un bord avant du noyau de tête annulaire (21a, 21b), la culasse centrale (22a) étant placée entre deux culasses périphériques (22b).

5. Transducteur magnétique selon l'une quelconque des revendications 1 à 4, caractérisé en ce qu'il comprend en outre une base d'assemblage (Figure 11, 35) pour supporter l'assemblage des composants, le noyau de transformateur (29) adhérant à la base d'assemblage (35).

6. Transducteur magnétique selon l'une quelconque des revendications 1 à 5, caractérisé en ce que ledit enroulement de signal (23) est pourvu d'un conducteur en forme de C (Figure 13A, 42) dont chaque extrémité est connectée à l'enroulement primaire (23c) du côté du noyau de tête annulaire (21b) sur lequel est placé le noyau de transformateur (46).

7. Transducteur magnétique selon l'une quelconque des revendications 1 à 5, caractérisé en ce que l'enroulement de signal (23) est pourvu d'une extension (Figure 14, 23e, 23d) de l'enroulement primaire (23) dont chaque extrémité est connectée à une partie conductrice (50) qui est placée du côté du noyau de tête annulaire (21a, 21b) opposé à celui sur lequel est placé le noyau de transformateur (46a).

8. Transducteur magnétique à plusieurs canaux caractérisé en ce qu'il comprend des éléments de transducteur dont chacun est un transducteur magnétique selon la revendication 1.

9. Transducteur magnétique à plusieurs canaux selon la revendication 8, caractérisé en ce que chacun des noyaux de transformateur (54) est disposé sur une des moitiés (53a) constituant le noyau de tête annulaire (53a, 53b) de manière telle que les noyaux de transformateur (54a) de canaux voisins sont placés dans un état décalé.

10. Transducteur magnétique à plusieurs canaux selon la revendication 8, caractérisé en ce que la culasse de liaison de chacun des éléments de transducteurs est pourvue d'une partie (53b) du noyau de tête annulaire (53a, 53b) constituant un canal voisin.

11. Transducteur mangétique à plusieurs canaux selon la revendication 8, caractérisé en ce que deux des éléments de transducteur sont formés comme une unité (Figure 17) de manière telle que le noyau de transformateur (54a) de chaque élément est placé entre les deux noyaux de tête annulaire (53a, 53b) de ces éléments, un des noyaux de transformateur (54a) étant placé sur une moitié de noyau de côté du noyau de tête annulaire et l'autre noyau de transformateur étant placé sur l'autre moitié de noyau de côté.

12. Transducteur magnétique à plusieurs canaux selon la revendication 8, caractérisé en ce que les culasses centrale et périphériques sont formées intégralement (Figure 18A) par rapport au noyau de tête annulaire (53a, 53c) en prévoyant des rainures séparées (57) dans la partie de surface du noyau de tête annulaire (53c).

**Patentansprüche**

1. Magnetischer Wandler mit einem Ringkopf und einem eingebauten Transformator, wobei der Transformator einen Teil seines magnetischen Weges mit einem Abschnitt eines Magnetkernes des Ringkopfes teilt, wobei der Ringkopf enthält: einen Ringkopfern (21a, 21b), der einen im wesentlichen geschlossenen magnetischen Weg, einen vornliegenden nichtmagnetischen Spalt und eine innere Wicklungsöffnung (25) definiert; und eine Signalwicklung (23), die auf dem Ringkopfkern (21a, 21b) durch die Wicklungsöffnung (25) angeordnet ist, um mit den geschlossenen magnetischen Weg verkettet zu sein, dadurch gekennzeichnet, daß ein Transformatorkern (22) auf einer rückseitigen Ebene des Ringkopfkerns (21a, 21b) befestigt ist und ein mittleres Joch (22a), wenigstens ein Umfangsjoch (22b) und ein Verbindungsjoch (22d) aufweist, wobei das mittlere Joch (22a) und die Umfangsjoche (22b) magnetisch miteinander am einen Ende durch das Verbindungsjoch (22d) und am anderen Ende durch den Ringkopfkern (21a, 21b) verbunden sind, um einen schalenförmigen Transformatorkern zu bilden; eine Primärwicklung (23) um den Transformatorkern (22) angeordnet ist, die das mittlere Joch (22a) umgibt und mit der Signalwicklung (23) verbunden ist; und eine Sekundärwicklung (24) um den Transformatorkern (22) angeordnet ist, die das mittlere Joch (22a) koaxial zur Primärwicklung (23) umgibt.

2. Magnetischer Wandler nach Anspruch 1, in welchem ein Verhältnis der Gesamtsumme der Querschnittsflächen der Umfangsjoche (22b) zur Querschnittsfläche des mittleren Joches (22a) nicht kleiner als zwei ist.

3. Magnetischer Wandler nach Anspruch 1, bei welchem eine Minimumdicke des Verbindungsjochs (22d) nicht kleiner ist, als eine Dicke des Ringkopfkerns (21a, 21b), wobei die Dicken in einer Richtung parallel zur Wicklungsachse der Transformatorwicklungen (23, 24) gemessen sind.

4. Magnetischer Wandler nach Anspruch 1, 2 oder 3, bei welchem ein Leitung, die die Mitten des mittleren Jochs (Fig. 10A, 22a)˙ und die Umfangsjoche (22b) vereinigt, parallel zu einer Vorderkante des Ringkopfkerns (21a, 21b) verläuft, wobei das mittlere Joch (22a) zwischen zwei Umfangsjochen (22b) angeordnet ist.

5. Magnetischer Wandler nach einem der Ansprüche 1 bis 4, weiterhin enthaltend einen Baugruppensockel (Fig. 11, 35) zum Tragen der Baugruppe aus den genannten Einzelteilen, wobei der Transformatorkern (29) an dem Baugruppensockel (35) befestigt ist.

6. Magnetischer Wandler nach einem der Ansprüche 1 bis 5, bei welchem die Signalwicklung (23) von einem c-förmigen Leiter (Fig. 13A, 42) gebildet ist, von dem jedes Ende mit der Primärwicklung (23c) auf jener Seite des Ringkopfkernes (21b) verbunden sit, auf welcher der Transformatorkern (46) angeordnet ist.

7. Magnetischer Wandler nach einem der Ansprüche 1 bis 5, bei dem die Signalwicklung (23) von einer Verlängerung (14a, 23e, 23d) der Primärwicklung (23) gebildet ist, von der jedes Ende mit einem Leiterabschnitt (50) verbunden ist, der auf jener Seite des Ringkernes (21a, 21b) angeordnet ist, die jener gegenüberliegt, auf der der Transformatorkern (46a) angeordnet ist.

8. Mehrkanaliger magnetischer Wandler enthaltend den magnetischen Wandler nach Anspruch 1 als ein jedes Wandlerelement.

9. Mehrkanaliger magnetischer Wandler nach Anspruch 8, bei dem jeder der Transformatorkerne (54) auf einer der Hälften (53a) angeordnet ist, die den Ringkopfkern (53a, 53b) bilden in der Weise, daß die Transformatorkerne (54a) benachbarter Kanäle gegeneinander versetzt angeordnet sind.

10. Mehrkanaliger magnetischer Wandler nach Anspruch 8, bei welchem das Verbindungsjoch eines jeden der Wandlerelemente von einem Abschnitt (53b) des Ringkopfkernes (53a, 53b) gebildet ist, der einen benachbarten Kanal ausbildet.

11. Mehrkanaliger magnetischer Wandler nach Anspruch 8, in welchem zwei der Wandlerelemente als eine Einheit (Fig. 17) so aufgebaut sind, daß die Transformatorkerne (54a) eines jeden Elementes zwischen den zwei Ringkopfkernen (53a, 53b) jener Elemente angeordnet sind, wobei einer der Transformatorkerne (54a) auf der Kernhälfte der einen Seite des Ringkopfkernes und der andere der Transformatorkerne auf der Kernhälfte der anderen Seite des Ringkopfkernes angeordnet sind.

12. Mehrkanaliger magnetischer Wandler nach Anspruch 8, bei welchem das mittlere und die Umfangsjoche integral (Fig. 18A) mit dem Ringkopfkern (53a, 53c) ausgebildet sind, indem der Oberflächenbereich des Ringkopfkernes (53c) mit trennenden Rillen (57) versehen ist.

(PRIOR ART)
*FIG.1.*

(PRIOR ART)
*FIG.2.*

(PRIOR ART)
*FIG.3.*

(PRIOR ART)
*FIG.4.*

FIG.5.

FIG.6.

FIG.7A.

FIG.7B.

FIG.7C.

FIG.8A.

FIG.8B.    FIG.8C.    FIG.8D.    FIG.8E.

CROSS-SECTIONAL AREA OF PERIPHERY YOKES
CROSS-SECTIONAL AREA OF CENTRAL YOKES

FIG.9A.

3

FIG. 9B.

FIG. 10A.

FIG. 10B.

FIG. 10C.

FIG. 10D.

FIG. 10E.

Fig. 11.

Fig. 12.

FIG. 13A.

FIG. 13B.

FIG. 14.

FIG.15A.

FIG.15B.

FIG.15C.

FIG. 16.

FIG. 17.

FIG. 18A.

FIG. 18B.